# EUROPÄISCHE PATENTSCHRIFT

(11) **EP 0 366 974 B1**
(45) Veröffentlichungstag und Bekanntmachung des Hinweises auf die Patenterteilung: **22.12.1993**
(21) Anmeldenummer: 89118656.1
(22) Anmeldetag: 07.10.1989
(51) Int. Cl.: G02B 6/42

(54) **Halbleiterschaltung**
Semiconductor circuit
Circuit semi-conducteur

(30) Priorität: 08.10.1988 DE 3834335
(43) Veröffentlichungstag der Anmeldung: 09.05.1990
(73) Patentinhaber: Deutsche Aerospace AG, 81663 München (DE)
(72) Erfinder: Weidel, Edgar, Dipl. Phys., D-7913 Senden (DE)
(74) Vertreter: Schulze, Harald Rudolf, Dipl.-Ing.

(56) Entgegenhaltungen:
- WO-A-84/00822
- WO-A-85/03179
- WO-A-87/05120
- US-A- 4 169 001
- US-A- 4 758 063
- PATENT ABSTRACTS OF JAPAN, Band 8, Nr. 194 (E-264)[1631], 6. September 1984; & JP-A-59 82 779
- ELECTRONICS LETTERS, Band 21, Nr. 11, 23. Mai 1985, Seiten 508-509, Stevenage, Herts, GB; Y. KOKUBUN et al.: "Silicon optical printed circuit board for three-dimensional integrated optics"

## Beschreibung

Die Erfindung betrifft eine Halbleiterschaltung nach dem Oberbegriff des Patentanspruchs 1.

Integrierte Halbleiterschaltungen bestehen aus einem (Halbleiter-)Substrat, z.B. scheibenförmigem, einkristallinem Silizium, mit einer Dicke von ungefähr 0,3 mm. Auf einer Oberflächenseite des Substrats ist in derzeit üblicher Halbleitertechnologie, z .B. Bipolar- oder CMOS-Technologie, eine Halbleiter-Schaltungsanordnung, z.B. bestehend aus Transistoren und Dioden, angeordnet. Auf dieser Halbleiter-Schaltungsanordnung befindet sich eine Leiterbahnschicht, die z.B. aus Aluminium-Leiterbahnen besteht. Die Leiterbahnschicht dient zum elektrischen Verbinden der beispielhaft erwähnten Transistoren und/oder Dioden. Eine derartige Anordnung wird auch als integrierte Schaltung (IS) bezeichnet. Komplexe Schaltungsanordnungen, wie z.B. Signalprozessoren oder Rechner, bestehen im allgemeinen aus einer größeren Anzahl derartiger Schaltungen(IS). Diese integrierten Schaltungen werden auf Karten, die z.B. aus Keramik oder einem Halbleitermaterial, z.B. Silizium, bestehen können, befestigt, z.B. durch Kleben und/oder Löten. Zwischen den integrierten Schaltungen werden über elektrische Leiterbahnen, die sich auf der Karte befinden, elektrische Verbindungen hergestellt.

Diese Karten werden dann in ein Gehäuse eingeschoben und über weitere elektrische Leiterbahnen in der Gehäuserückwand miteinander verbunden.

Die dabei benötigte Anzahl von elektrischen Verbindungsleitungen kann extrem groß sein. So kann ein Signalprozessor beispielsweise mehr als 100 integrierte Schaltungen enthalten, die viele tausende elektrischer Verbindungsleitungen erfordern. Die Taktraten heutiger Schaltungen liegen typisch bei 20 MHz. Um schnellere Signalprozessoren herzustellen, sind Taktraten von 100 MHz und mehr erforderlich. Mit zunehmenden Taktraten steigt jedoch die Gefahr eines störenden elektrischen Übersprechens zwischen parallelen oder sich kreuzenden Leitungen. Es erhöht sich damit die Wahrscheinlichkeit eines Bitfehlers.

Der Erfindung liegt daher die Aufgabe zugrunde, eine gattungsgemäße Halbleiterschaltung anzugeben, welche eine hohe Packungsdichte elektronischer Bauelemente ermöglicht, welche eine hohe Datenübertragungsrate zwischen entfernt angeordneten Bauelementen und/oder Bauelementgruppen ermöglicht, welche eine möglichst geringe Fehlerwahrscheinlichkeit aufweist und welche kostengünstig und zuverlässig herstellbar ist.

Diese Aufgabe wird gelöst durch die im kennzeichnenden Teil des Patentanspruchs 1 angegebenen Merkmale.

Vorteilhafte Ausgestaltungen und/oder Weiterbildungen sind den Unteransprüchen entnehmbar.

Ein erster Vorteil der Erfindung besteht darin, daß insbesondere für die Verbindung zwischen elektronischen Bauelementgruppen integrierte Lichtwellenleiter eingesetzt werden. Diese ermöglichen eine hohe Nachrichtenübertragungsrate und sind hochgenau herstellbar, z.B. mit Hilfe der Photolithographie und/oder der Ionenimplantationstechnologie.

Ein zweiter Vorteil besteht darin, daß der elektrische und der optische Teil der Halbleiterschaltung getrennt herstellbar und prüfbar sind. Dadurch können für jeden Teil optimale und daher kostengünstige und zuverlässige Herstellungsver fahren gewählt werden.

Ein dritter Vorteil besteht darin, daß bei dem elektrischen Teil der Halbleiterschaltung nahezu keine Bondverbindungen benötigt werden, so daß dieser Teil in planarer Halbleiter-Technologie ausführbar ist.

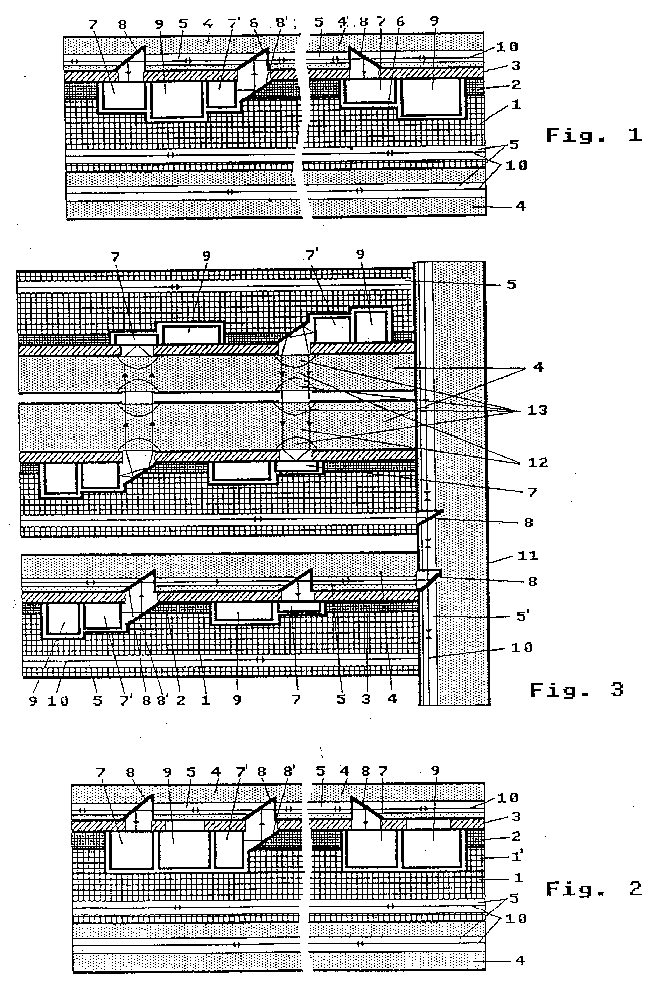

Die Erfindung wird im folgenden anhand von Ausführungsbeispielen näher erläutert unter Bezugnahme auf eine schematische Zeichnung. Dabei zeigen die FIG. 1 bis 3 Schnitte durch Ausführungsbeispiele.

FIG. 1 zeigt ein Substrat 1, z.B. eine derzeit in der Halbleitertechnologie übliche kreisförmige Silizium-Einkristallscheibe mit einer Dicke von ungefähr 0,3 mm bis 0,5 mm und einem Durchmesser von ungefähr 150 mm. Auf dieser befinden sich elektrische Leiterbahnen 3, die planar in derzeit üblicher Technologie hergestellt sind. Die Leiterbahnen 3 sind in einer Schicht enthalten, die aus vorzugsweise zwei Lagen metallischer Streifenleiter besteht, die durch dazwischenliegende dielektrische Isolierschichten getrennt sind. Neu ist, daß in dem Substrat 1 mindestens eine Aussparung oder Vertiefung 6 erzeugt ist, z.B. durch Ätzen, die so tief ist, daß darin mindestens ein elektro-optischer und/oder opto-elektrischer Wandler 7, 7′ sowie mindestens eine integrierte Schaltung 9 angeordnet werden können, z.B. durch Kleben oder Löten, derart, daß deren Oberflächen mit derjenigen der Leiterbahnschicht im wesentichen eine Ebene bilden. Dann ist es möglich, die Wandler 7, 7′ und die integrierte Schaltung mit Hilfe von Leiterbahnen 3 mit der Leiterbahnschicht elektrisch zu verbinden. In den Figuren bezeichnet 7 einen opto-elektrischen Wandler, z.B. eine Fotodiode, und 7′ einen elektro-optischen Wandler, z.B. eine Laserdiode.

In der Vertiefung 6 können weitere Bauelemente angeordnet werden, z.B. ein elektrischer Multiplexer/Demultiplexer sowie Treiberschaltungen für die Wandler 7, 7′. Alle diese Bauelemente bilden im wesentlichen eine Ebene und werden elektrisch über die Leiterbahnschicht kontaktiert. Über der Leiterbahnschicht befindet sich mindestens eine optische Verbindungsschicht 4, z.B. eine Glasplatte mit einer Dicke von ungefähr 0,3 mm bis 2 mm. In dieser befindet sich mindestens ein vorzugsweise in optisch integrierter Weise hergestellter Lichtwellenleiter 5, der z.B. mit Hilfe derzeit üblicher photolithographischer Verfahren sowie eines daran anschließenden Ionenaustauschverfahrens hergestellt ist. Der Lichtwellenleiter 5 besitzt z.B. eine quadratische Querschnittsfläche des Kerns mit einer Seitenlänge von ungefähr 40 µm. Die Verbindungsschicht 4 kann aber auch aus Kunststoff bestehen, in welcher Kunststoff-Lichtwellenleiter vorhanden sind. In der Verbindungsschicht 4 sind außerdem un- und/oder halbdurchlässige Umlenkspiegel 8 vorhanden, über welche die Wandler 7, 7′ optisch an den Lichtwellenleiter 5 koppelbar sind, z.B. mit Hilfe weiterer Umlenkspiegel 8′, die in dem Substrat 1 angeordnet sind. Alle Umlenkspiegel 8, 8′ sind durch physikalische und/oder chemische Verfahren herstellbar, z.B. durch Prägen Fräsen, Schleifen, Polieren und/oder Ätzen.

Anschließend daran können die Umlenkspiegel 8, 8′ noch mit optisch wirksamen Schichten beschichtet werden, z.B. halbdurchlässigen oder total reflektierenden Schichten. Dieser Beschichtungsvorgang kann z.B. im Vakuum mit Hilfe eines Schrägbedampfungsverfahrens erfolgen. Eine solche Verbindungsschicht 4 wird dann auf der Leiterbahnschicht oder einer darüber befindlichen Schutzschicht, z.B. einer Oxidschicht, derart befestigt, z.B. durch Kleben, daß die Umlenkspiegel 8 der Leiterbahnschicht zugewandt sind und sich über den optischen Ein- und/oder Austrittsöffnungen der Wandler 7, 7′ befinden. Es ist selbstverständlich, daß in der Leiterbahnschicht entsprechende Öffnungen vorhanden sind. Eine derartige Anordnung ermöglicht, daß das von dem Wandler 7′, z.B. einem Halbleiterlaser, ausgesandte Licht 10, das z.B. so moduliert ist, daß eine Nachrichtenübertragungsrate bis ungefähr 2 GBit/s möglich ist, in den in der Verbindungsschicht 4 befindlichen Lichtwellenleiter eingekoppelt wird und dort über relativ weite Entfernungen, z.B. einige cm, was durch die Unterbrechung dargestellt ist, zu dem in FIG. 1, rechts dargestellten Wandler 7 übertragen werden kann. Die entstehenden elektrischen Signale werden über elektrische Leiterbahnen 3 zu einer integrierten Schaltung 9, z.B. einem Demultiplexer, übertragen und dann weiterverarbeitet.

Der Lichtwellenleiter 5 kann z.B. so dimensioniert sein, daß darin eine optische Wellenlängenmultiplex-Übertragung in entgegengesetzten Richtungen möglich ist. Dieses ist durch die Doppelpfeile dargestellt. Weiterhin ist es möglich, z.B. durch Ionenimplantation, in dem Substrat 1 ebenfalls einen Lichtwellenleiter 5 zu erzeugen und darin Licht 10 zu übertragen. Außerdem kann auch unterhalb des Substrates 1 mindestens eine Verbindungsschicht, in der sich mindestens ein Lichtwellenleiter 5 befindet, angebracht sein.

Wird ein elektro-optischer Wandler 7′ verwandt, der Licht senkrecht zur Oberfläche des Substrates 1 aussendet, so kann der Umlenkspiegel 8′ entfallen.

Weiterhin kann in dem Substrat 1 zusätzlich eine schichtförmige Halbleiter-Schaltungsanordnung 2, die z B. in Bipolartechnologie ausgeführt ist, vorhanden sein.

FIG. 2 zeigt ein weiteres Ausführungsbeispiel. Das Substrat 1 weist keine Vertiefungen auf, sondern eine vorzugsweise ebene Oberfläche. Die elektrischen Leiterbahnen 3 befinden sich auf einem Substrat 1′ das vorzugsweise aus Si besteht und mit dem Substrat 1 befestigt ist, beispielsweise durch Löten, Schweißen, Kleben, Bonden oder anodischem Bonden. Die Höhe des Substrats 1′, der opto-elektrischen Wandler 7, 7′ und der integrierten Schaltungen 9 ist gleich groß mit zulässigen Abweichungen von maximal etwa 20 µm. Das Substrat 1′ weist Aussparungen 6 auf, in denen die Wandler 7, 7′ und die Schaltungen 9 untergebracht sind. Im Gegensatz zu FIG. 1 erstrecken sich die elektrischen Leiterbahnen 3 auch nicht über die gesamte Fläche der integrierten Schaltungen 9, sondern nur bis zu Kontaktpunkten in den Randbereichen.

Kombinationen entsprechend FIG. 1 und FIG. 2 sind ebenfalls ausführbar.

FIG. 3 zeigt ein Ausführungsbeispiel, in dem mehrere Anordnungen gemäß FIG. 1 und/oder FIG. 2 optisch koppelbar sind. Dieses erfolgt mit Hilfe einer optischen Leiterplatte 11, z.B. ebenfalls einer Glas- oder Kunststoffplatte, in der sich mindestens ein Lichtwellenleiter 5′ sowie un- und/oder halbdurchlässige Umlenkspiegel befinden. Die Leiterplatte 11 ist im wesentlichen senkrecht zu mehreren parallel stehenden Anordnungen gemäß FIG. 1 und FIG. 2 so angeordnet, daß die in der Leiterplatte 11 befindlichen Umlenkspiegel das in dem Lichtwellenleiter 5′ befindliche Licht 10 in die Lichtwellenleiter 5 koppeln.

Eine weitere zusätzliche oder alternative Möglichkeit der optischen Kopplung zwischen mehreren Anordnungen gemäß FIG. 1 ist in dem oberen Teil der FIG. 3 dargestellt. Dort sind zwei Anordnungen gemäß FIG. 1 parallel so angeordnet, daß sich ihre Verbindungsschichten 4 gegenüber liegen. Diese können in der dargestellten Weise einen Abstand voneinander besitzen oder sich berühren und/oder zusammengefügt sein, z.B. mit einem Kleber. Das von einem Wandler 7′ ausgesandte Licht (Pfeile) wird z.B. über eine in der Verbindungsschicht enthaltene abbildende Optik 13, z.B. diffundierte Konvexlinsen, in einen Lichtweg 12, z.B. ebenfalls einen Lichtwellenleiter, gekoppelt, der senkrecht durch die zwei Verbindungsschichten läuft und an dessen anderem Ende sich ein opto-elektrischer Wandler, z.B. eine Fotodiode, befindet.

Weiterhin ist es möglich, die Optik 13 an den Randbereich des Substrates zu legen und damit mehrere Anordnungen entsprechend den FIG. 1 und 2 zu koppeln.

Die beschriebenen Anordnungen ermöglichen vorteilhafterweise, die Vorteile einer integrierten elektrischen Schaltung mit denjenigen einer integrierten optischen Schaltung zu kombinieren. Damit lassen sich z.B. sehr schnelle Höchstleistungsrechner herstellen, da einerseits eine hohe Packungsdichte elektrischer Bauelemente möglich ist und andererseits eine hohe Datenübertragungsrate zwischen verschiedenen Schaltungsanordnungen ermöglicht wird.

Die Erfindung ist nicht auf die beschriebenen Ausführungsbeispiele beschränkt, sondern sinngemäß auf weitere anwendbar. So können beispielsweise die Verbindungsschichten optische Schalter und/oder optische Multiplexer und/oder Demultiplexer enthalten und/oder mit diesen und/oder weiteren Einzel-Lichtwellenleitern, z.B. einem sehr langen Mono-mode-Lichtwellenleiter, gekoppelt sein.

## Patentansprüche

1. Halbleiterschaltung, bestehend aus einem Substrat, auf dem mindestens eine integrierte Schaltung und mehrere elektrische Leiterbahnen angeordnet sind,
dadurch gekennzeichnet,
daß eine optische Verbindungsschicht (4) oberhalb der Leiterbahnen (3) und der integrierten Schaltung (9) und/oder an der Unterseite des Substrates (1) angeordnet ist,
daß in jeder optischen Verbindungsschicht (4) und innerhalb des Substrats (1) mindestens ein Lichtwellenleiter (5) vorhanden ist,
daß sich in einer Aussparung oder Vertiefung (6) des Substrates (1) mindestens ein elektro-optischer und/oder ein opto-elektrischer Wandler (7, 7') befindet, der optisch an den Lichtwellenleiter (5) angekoppelt ist und der elektrisch mit Hilfe der darüberliegenden Leiterbahnen (3) mit der integrierten Schaltung (9) verbunden ist, welche sich ebenfalls in einer Aussparung oder Vertiefung (6) im Substrat (1) befindet.

2. Halbleiterschaltung nach Anspruch 1, dadurch gekennzeichnet, daß zumindest in der Verbindungsschicht (4) mindestens ein Umlenkspiegel (8), über welchen der Wandler (7, 7') und der Lichtwellenleiter (5) optisch koppelbar sind, vorhanden ist.

3. Halbleiterschaltung nach Anspruch 1 oder Anspruch 2,
dadurch gekennzeichnet,
daß der elektrooptische Wandler (7') als lichtemittierendes Halbleiterbauelement, das Licht im wesentlichen parallel zur Oberfläche des Substrates (1) aussendet, ausgebildet ist und daß in dem Substrat (1) und der Verbindungsschicht (4) jeweils ein Umlenkspiegel (8, 8'), über welchen der Wandler (7) an den Lichtwellenleiter (5) optisch koppelbar ist, vorhanden ist.

4. Halbleiterschaltung nach einem der Ansprüche 1 oder 2, dadurch gekennzeichnet, daß der elektrooptische Wandler (7') als lichtemittierendes Bauelement, das Licht im wesentlichen senkrecht zur Oberfläche des Substrates (1) aussendet, ausgebildet ist und daß sich in der Verbindungsschicht (4) ein Umlenkspiegel (8) befindet, über welchen das Licht in den Lichtwellenleiter (5) einkoppelbar ist.

5. Halbleiterschaltung nach einem der vorhergehenden Ansprüche, dadurch gekennzeichnet, daß zumindest ein in dem Substrat (1) befindlicher Umlenkspiegel (8') als Kristallebene ausgebildet ist.

6. Halbleiterschaltung nach einem der vorhergehenden Ansprüche, dadurch gekennzeichnet, daß die Verbindungsschicht (4) aus Glas und/oder Kunststoff besteht und daß die darin befindlichen Umlenkspiegel (8) als mechanisch und/oder chemisch hergestellte Vertiefungen ausgebildet sind.

7. Halbleiterschaltung nach einem der vorhergehenden Ansprüche, dadurch gekennzeichnet, daß mindestens zwei Verbindungsschichten (4), die verschiedenen Substraten (1) zugeordnet sind, durch eine optische Leiterplatte (11), die mindestens einen Lichtwellenleiter (5') enthält, optisch gekoppelt sind.

8. Halbleiterschaltung nach Anspruch 7, dadurch gekennzeichnet, daß die Leiterplatte (11) aus Glas oder Kunststoff oder Halbleitermaterial oder aus einer Kombination dieser Materialien besteht.

9. Halbleiterschaltung nach einem der vorhergehenden Ansprüche, dadurch gekennzeichnet, daß die optische Kopplung von mindestens zwei Lichtwellenleitern und/oder von mindestens zwei Wandlern durch mindestens einen Lichtweg (12) erfolgt, der eine abbildende Optik (13) enthält.

10. Halbleiterschaltung nach Anspruch 9, dadurch gekennzeichnet, daß die Optik (13) als integrierte Optik ausgebildet ist.

## Claims

1. Semiconductor circuit consisting of a substrate, on which at least one integrated circuit and several electrical conductor tracks are arranged, characterised thereby, that an optical connecting layer (4) is arranged above the conductor tracks (3) and the integrated circuit (9) and/or at the underside of the subtrate (1), that at least one optical conductor (5) is present in each optical connecting layer (4) and within the substrate (1), that at least one electro-optical and/or one opti-electrical transducer (7, 7') is disposed in a cut-out portion or recess (6) of the substrate (1), is coupled optically to the optical conductor (5) and coupled electrically with the integrated circuit (9), which is likewise disposed in a cut-out portion or recess (6) of the substrate (1), with the aid of the conductor tracks (3) lying thereover.

2. Semiconductor circuit according to claim 1, characterised thereby, that at least one deflecting mirror (8), by way of which the transducer (7, 7') and the optical conductor (5) are couplable optically, is present at least in the connecting layer (4).

3. Semiconductor circuit according to claim 1 or claim 2, characterised thereby, that the electro-optical transducer (7') is constructed as light-emitting semiconductor component which emits light substantially parallelly to the surface of the substrate (1) and that a respective deflecting mirror (8, 8') by way of which the transducer (7) is optically couplable to the optical conductor (5), is present in the substrate (1) and the connecting layer (4).

4. Semiconductor circuit according to claim 1 or claim 2, characterised thereby, that the electro-optical transducer (7') is constructed as light-emitting semiconductor component which emits light substantially perpendicularly to the surface of the substrate (1) and that deflecting mirror (8), by way of which the light is couplable into the optical conductor (5), is disposed in the connecting layer (4).

5. Semiconductor circuit according to one of the preceding claims, characterised thereby, that at least one deflecting mirror (8') disposed in the substrate (1) is constructed as crystal plane.

6. Semiconductor circuit according to one of the preceding claims, characterised thereby, that the connecting layer (4) consists of glass and/or synthetic material and that the deflecting mirrors (8) disposed therein are constructed as mechanically and/or chemically produced depressions.

7. Semiconductor circuit according to one of the preceding claims, characterised thereby, that at least two connecting layers (4), which are associated with different substrates (1), are optically coupled by an optical conductor plate (11), which contains at least one optical conductor (5').

8. Semiconductor circuit according to claim 7, characterised thereby, that the conductor plate (11) consists of glass or synthetic material or semiconductor material of a combination of these materials.

9. Semiconductor circuit according to one of the preceding claims, characterised thereby, that the optical coupling of at least two optical conductors and/or of at least two transducers takes place through at least one light path (12), which contains an optical imaging system (13).

10. Semiconductor circuit according to claim 9, characterised thereby, that the optical system (13) is constructed as integrated optical system.

## Revendications

1. Circuit semi-conducteur constitué d'un substrat sur lequel sont disposés au moins un circuit intégré et plusieurs pistes conductives électriques,
caractérisé en ce
qu'une couche de liaison optique (4) est disposée au-dessus des pistes conductives (3) et du circuit intégré (9) et/ou sur la face inférieure du substrat (1),
qu'au moins un guide d'ondes optique (5) est présent dans chaque couche de liaison optique (4) et à l'intérieur du substrat (1),
qu'un évidement ou creux (6) du substrat (1) contient au moins un convertisseur électro-optique et/ou un convertisseur opto-électrique (7, 7') qui est couplé optiquement au guide d'ondes optique (5) et est relié électriquement, à l'aide des pistes conductives (3) situées au-dessus, au circuit intégré (9), lequel se trouve aussi dans un évidement ou creux (6) du substrat (1).

2. Circuit semi-conducteur selon la revendication 1, caractérisé en ce qu'au moins un miroir de déviation (8), par lequel le convertisseur (7, 7') et le guide d'ondes optique (5) peuvent être couplés optiquement, est présent dans la couche de liaison (4) au moins.

3. Circuit-semi-conducteur selon la revendication 1 ou 2, caractérisé en ce que le convertisseur électro-optique (7') est réalisé comme un composant semi-conducteur émetteur de lumière, qui émet de la lumière pour l'essentiel parallèlement à la surface du substrat (1), et que le substrat (1) et la couche de liaison (4) contiennent chacun un miroir de déviation (8, 8'), miroirs par lesquels le convertisseur (7) peut être couplé optiquement au guide d'ondes optique (5).

4. Circuit semi-conducteur selon la revendication 1 ou 2, caractérisé en ce que le convertisseur électro-optique (7') est réalisé comme un composant émetteur de lumière, qui émet de la lumière pour l'essentiel perpendiculairement à la surface du substrat (1), et que la couche de liaison (4) contient un miroir de déviation (8) par lequel la lumière peut être injectée dans le guide d'ondes optique (5).

5. Circuit semi-conducteur selon une des revendications précédentes, caractérisé en ce qu'au moins un miroir de déviation (8') se trouvant dans le substrat (1) est réalisé comme un plan de cristal.

6. Circuit semi-conducteur selon une des revendications précédentes, caractérisé en ce que la couche de liaison (4) est en verre et/ou matière plastique et que les miroirs de déviation (8) contenus en elle sont formés par des creux réalisés mécaniquement et/ou chimiquement.

7. Circuit semi-conducteur selon une des revendications précédentes, caractérisé en ce qu'au moins deux couches de liaison (4), coordonnées à différents substrats (1), sont couplées optiquement par une lame guide d'ondes optique (11) qui contient au moins un guide d'ondes optique (5').

8. Circuit semi-conducteur selon la revendication 7, caractérisé en ce que la lame guide d'ondes optique (11) est faite de verre, matière plastique ou matériau semi-conducteur, ou d'une combinaison de ces matériaux.

9. Circuit semi-conducteur selon une des revendications précédentes, caractérisé en ce que le couplage optique d'au moins deux guides d'ondes optiques et/ou d'au moins deux convertisseurs s'effectue par au moins un chemin de transmission de lumière (12) contenant une optique de formation d'image (13).

10. Circuit semi-conducteur selon la revendication 9, caractérisé en ce que l'optique (13) est réalisée comme une optique intégrée.
